# EUROPEAN PATENT APPLICATION

(11) **EP 1 207 669 A2**
(43) Date of publication of application: **22.05.2002**
(21) Application number: 01309577.3
(22) Date of filing: 13.11.2001
(51) Int. Cl.: H04L 29/06

(54) **Method for mapping information from a network-based data source**

(30) Priority: 16.11.2000 US 713937
(71) Applicant: GENERAL ELECTRIC COMPANY, Schenectady, NY 12345 (US)
(72) Inventor: Rosenfeld, John Richard, Mason, Ohio 45040 (US)
(74) Representative: Goode, Ian Roy

(57) **Abstract**

The disclosed invention is a method for mapping information using a network-based integration system. The method involves creating (156) custom data logic by mapping information from network-based data source to a client user interface of an internal computer application and then launching (138) a tool capable of reading (144) the network-based data source, copying (154) the information, and transferring (160) the information that was copied from the data source onto a destination client user interface form of an internal system to eliminate the need for manual input.

## Description

This invention relates generally to information mapping and, more particularly, to methods and apparatus for mapping information from a network-based data source.

Organizations typically develop network-based transaction and information systems to conduct business with their customers. These network-based transaction systems offer valuable services in the selection, documentation, comparison, and recommendation of products or services, and also address key product support and information needs of a customer. For example, such network-based order entry is being utilized by many industries. Examples of networks include a local area network (LAN), a wide area network (WAN), the Internet, or an Intranet. Organizations have also developed several internal systems that provide technology-based services to their own organization in support of their existing business processes. Such systems are integrated to provide an infrastructure used to run the business successfully. An example of one internal system is an Enterprise Resource Planning system.

Internal systems may or may not be accessible to the Internet. One important issue that companies face is the integration of the Internet with the companies core, internal on-line systems. For example, a company that has established a fully integrated procurement system that generates electronic purchase orders will be challenged with the decision to use this system for procurement or to supplement one of the many online order management systems currently available. Failure to integrate the information available from the Internet into the internal systems may force organizations to incur significant additional expenses.

Integration of data from the network-based sources onto the internal systems is typically accomplished using two different methods. In a first method, users use their browser to access various network-based systems to gather information required for a business decision, and record the results from their queries by hand, into their internal systems' interface screens. This approach is tedious and inefficient.

The second method requires much more financial investment in comparison to the first method and requires the organization to integrate their internal systems with the network-based systems offered by their trading partners. The second method utilizes network access for the internal system, a definition of transactional data standards, and an extensive data mapping between the applications. However, despite the additional networking, this approach might actually inhibit the use of some of the services offered by the organization's internal systems. For example, an organization may be able to integrate their procurement system with the order management system of one of their vendors, but this integration might circumvent the established workflow and approval process that their internal system includes. In addition the system uses a single integration between selected systems. However, a single integration may not work with other vendors, and subsequent integration work would then required for each vendor or partner added to the system.

In an exemplary embodiment, a searchable network-based integration system integrates a plurality of systems at a user interface level rather than at an organizational system level. In the exemplary embodiment, the apparatus is an Internet-based tool, known as a Client-Side Systems Integration Tool (CSSIT), that transfers information obtained from the Internet to an internal systems interface at a client's personal computer. An end product of the network-based system is a thin client customized to read information from browser screens, XML data sources, or other Internet based information sources, and copy such information to the client user interface of an internal system. The network-based system allows the individual user to access information and transactional systems on the network to gain assistance in making a business decision, and then transfer the results to an internal system that may or may not be accessible to the Internet.

The network-based system provides the capability to map information from an Internet data source (e.g.HTML file, email, XML file, SGML file, etc.) to a client user interface or vice-versa. Once such mapping has been completed, the tool repeatedly passes information between these system interfaces. The network-based system exchanges information between the client interface screens of two or more systems that are otherwise disconnected. For example, the user may search the Internet for a required product by leveraging the various search, selection, and comparison tools provided online for selected manufacturers. Once the product is found, the network-based tool reads the network page or data source and copies all of the pertinent data directly from that page. The network-based system uses logic that had been mapped previously to paste the data into the user's internal purchase order screen. As a result, the network-based tool allows the user to create custom data mapping logic between a plurality of interface screens.

Embodiments of the invention will now be described, by way of example, with reference to the accompanying drawings, in which:
Figure 1 is a block diagram of an exemplary embodiment of a server architecture of a network-based integration system;
Figure 2 shows a configuration of a database within a database server of the server system shown in Figure 1;
Figure 3 is an exemplary embodiment of a transfer process; and
Figure 4 is a process flow chart utilized by the network-based integration system.

Exemplary embodiments of systems and processes that facilitate integrated network-based electronic mapping and workflow process management utilizing a network-based integration system, known in one embodiment, as a Client-Side System Integration Tool (CSSIT) are described below in detail. The systems and processes facilitate, for example, electronic mapping of information from a data source using a client system, automated extraction of information, and web-based copying from the data source onto a destination form of an internal system, thus eliminating a need for manually inputting the data.

In an exemplary embodiment, a method for mapping information from an Internet data source to a plurality of internal systems permits procurement or order management using a network-based Client-Side System Integration Tool (CSSIT). The method includes creating custom data logic by mapping information from any network-based data source, such as an Internet-based data source, to any client user interface of an internal computer application, and then reading the network-based data source, copying the information, and finally transferring the information that was copied from the data source to a destination client user interface form of an internal system. The network-based integration system eliminates manual input from the network-based data source.

The systems and processes are not limited to the specific embodiments described herein. In addition, components of each system and each process can be practiced independently and separately from other components and processes described herein. Each component and process can also be used in combination with other components and processes.

A network-based integration system 10 utilizes a web-enabled interactive database to automate a mapping process. System 10 captures information from a data source and maps on-line, up-to-date information to an internal system. In one exemplary embodiment, system 10 utilizes a Relational Database that includes a client user interface front-end for administration, and a web interface for creating standard user input and reports. Information is accessed in the database through Structured Query Language (SQL). System 10 is a mapping tool that can be used by a single user or by an organization via the Internet.

System 10 supports various levels of management hierarchy and provides access to individuals based on an employment level of the individual within the organization. System 10 is capable of downloading data extracted to populate additional software tools such as Microsoft Excel or Microsoft Access, thus increasing an amount of flexibility of an end-user. Similarly, the data extracted can be uploaded to the CSSIT from products such as Microsoft Excel or Microsoft Access.

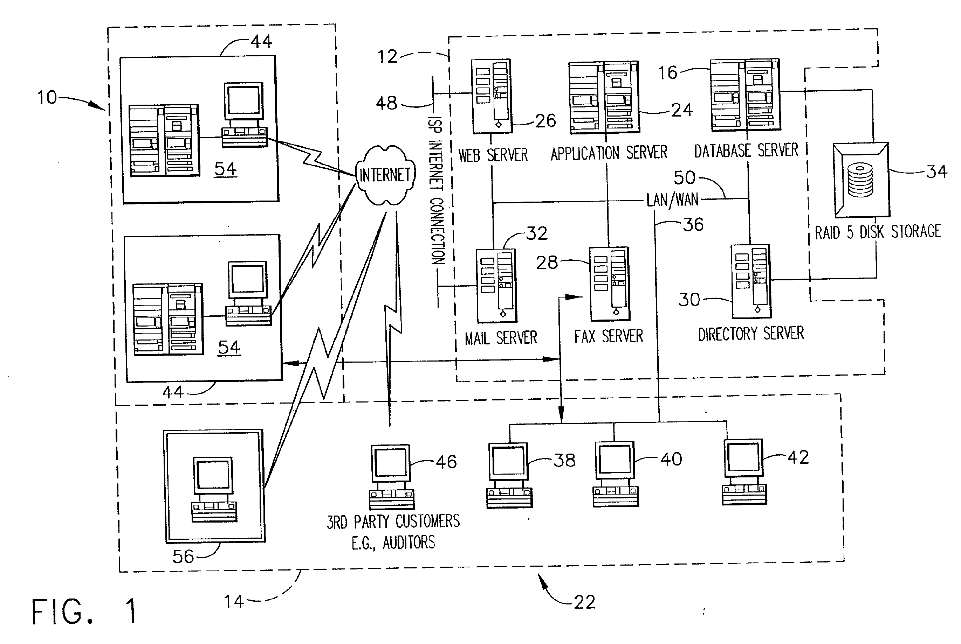

Figure 1 is a block diagram of an exemplary embodiment of a server architecture of network-based integration system 10, known as a Client-Side System Integration Tool (CSSIT) 22. System 22 includes a server system 12 and client systems 14. Server system 12 further includes a database server 16, an application server 24, a web server 26, a fax server 28, a directory server 30, and a mail server 32. A disk storage unit 34 is coupled to database server 16 and directory server 30. Servers 16, 24, 26, 28, 30, and 32 are coupled within a local area network (LAN) 36. In addition, a system administrator's workstation 38, a user workstation 40, and a supervisor's workstation 42 are coupled to LAN 36. Alternatively, workstations 38, 40, and 42 are coupled to LAN 36 via an Internet link or through an intranet. In an exemplary embodiment, a software module capable of transferring data from one application to the other resides on application server 24 of CSSIT 22.

Each workstation, 38, 40, and 42 is a personal computer that includes a web browser. Although the functions performed at the workstations typically are illustrated as being performed at respective workstations 38, 40, and 42, such functions can be performed using personal computers coupled to LAN 36. Workstations 38, 40, and 42 are illustrated as being associated with separate functions only to facilitate an understanding of the different types of functions that can be performed by individuals having access to LAN 36.

In another embodiment, server system 12 is configured to be communicatively coupled to various individuals or employees 44 and to third parties, e.g., internal or external auditors, 46 via an ISP Internet connection 48. The communication in the exemplary embodiment is illustrated as being performed via the Internet, however, any other wide area network (WAN) type communication can be utilized in other embodiments, i.e., the systems and processes are not limited to being practiced via the Internet. In addition, and rather than WAN 50, local area network 36 could be used in place of WAN 50.

In the exemplary embodiment, an authorized individual or an employee of the organization having a workstation 54 can access CSSIT 22. At least one of client systems 14 includes a senior manager's workstation 56 located at a remote location. Workstations 54 and 56 are personal computers including a web browser. Also, workstations 54 and 56 are configured to communicate with server system 12. Furthermore, fax server 28 communicates with computers/thin clients 44 located outside the organization and any of the remotely located client systems, including a client system 56 via a telephone link. Fax server 28 is configured to communicate with other client systems 38, 40, and 42 as well.

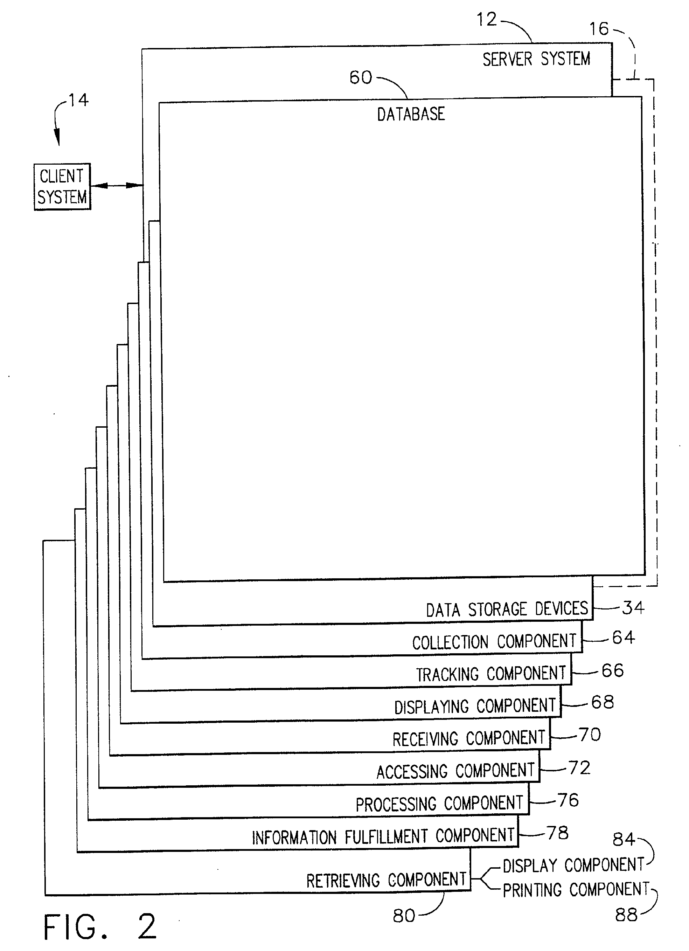

Figure 2 shows a configuration of database 60 within database server 16 of server system 12 shown in Figure 1. Database 60 is coupled to several separate components within server system 12, which perform specific tasks.

Server system 12 includes a collection component 64 for collecting information from users into centralized database 60, a tracking component 66 for tracking information, a displaying component 68 for displaying information, a receiving component 70 for receiving a specific query from client system 14, and an accessing component 72 for accessing centralized database 60. Receiving component 70 is programmed to receive a specific query from one of a plurality of users. Server system 12 further includes a processing component 76 for searching and processing received queries against data storage device 34 which contains a variety of information collected by collection component 64. An information fulfillment component 78, located in server system 12, downloads the requested information to the plurality of users in the order in which the requests were received by receiving component 70. Information fulfillment component 78 downloads the information after the information is retrieved from data storage device 34 with a retrieving component 80. Retrieving component 80 retrieves, downloads and sends information to client system 14 based on a query received from client system 14 regarding various alternatives.

Retrieving component 80 further includes a display component 84 that downloads information to be displayed on a client system's graphical user interface, and a printing component 88 that prints requested information. Retrieving component 80 generates various reports requested by the user through client system 14 in a pre-determined format. System 10 provides alternative reports and is not constrained to the options set forth above.

The architectures of system 22 as well as various components of system 22 are exemplary only. Other architectures are possible and can be utilized in connection with practicing the processes described below.

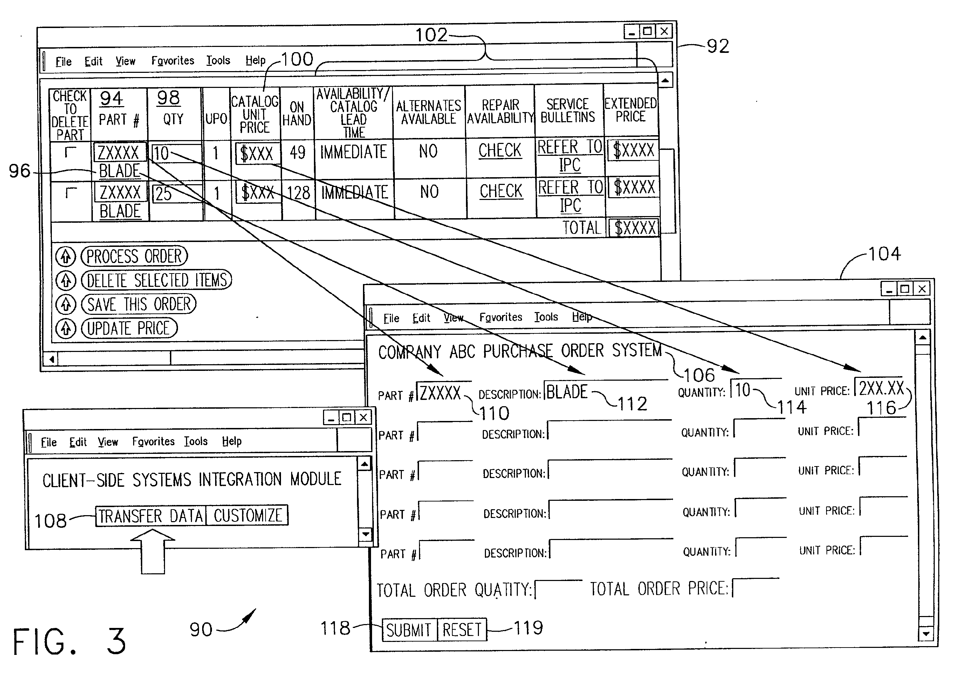

Figure 3 is an exemplary embodiment of a transfer process 90. As shown in Figure 3, in an exemplary embodiment, a user has opened up a specific HTML page 92 that describes a Part Number 94, a Description 96, a Quantity 98, a Catalog Unit Price 100, and other related information 102. Once the user retrieves the data 94,96, 98, 98, 100, and 102 from page 92, the user opens up another user interface 104 by invoking application entitled "Company ABC Purchase Order system" 106 through the company's internal system. Subsequent to opening page 92 and Company ABC Purchase Order system 106, CSSIT 22 (shown in Figure 1) is launched by selecting a Transfer Data button 108. In an exemplary embodiment, a software module capable of transferring data from one application to another resides on application server 24 of CSSIT 22. Upon successfully transferring data, Part Number 94, Description 96, Quantity 98, and Catalog Unit Price 100 are transferred to Purchase Order system's user interface 104 and stored in respective pre-defined spaces for a Part Number 110, a Description 112, a Quantity 114, and a Unit Price 116 located on user interface 104. The transfer process avoids transfer of data by re-entering it manually. Once the data is successfully transferred, the user verifies the data from user interface 104 and, if acceptable, submits the data to Company ABC Purchase Order system 106 by selecting a Submit button 118. A Reset button 119 resets the transfer data, if necessary.

In yet another exemplary embodiment, searchable web-based Client-Side Systems Integration Tool (CSSIT) 22 integrates a plurality of systems at the individual user interface level rather than at an organizational system level. CSSIT 22 transfers information obtained over the Internet to an internal systems interface at the client's personal computer 14. One of the components of CSSIT 22 is a thin client 44 or workstations 38, 40, 42 (shown in Figure 1) customized to read information from browser screens, XML data sources, or other Internet-based information sources and copy that information to the client user interface of an internal system. The CSSIT allows the individual user to access information on the Internet to gain assistance in making a business decision and then transfer the results to an internal system that may or may not be accessible to the Internet.

In another embodiment of the invention, CSSIT 22 provides the capability to map information from any Internet data source (e.g.HTML file, email, XML file, SGML file, etc.) to any client user interface or vice versa. Once the mapping has been completed, network-based tool 22 is used repeatedly to pass information between these system interfaces, and 'cuts and pastes' the information between the client interface screens of two or more systems that are otherwise disconnected.

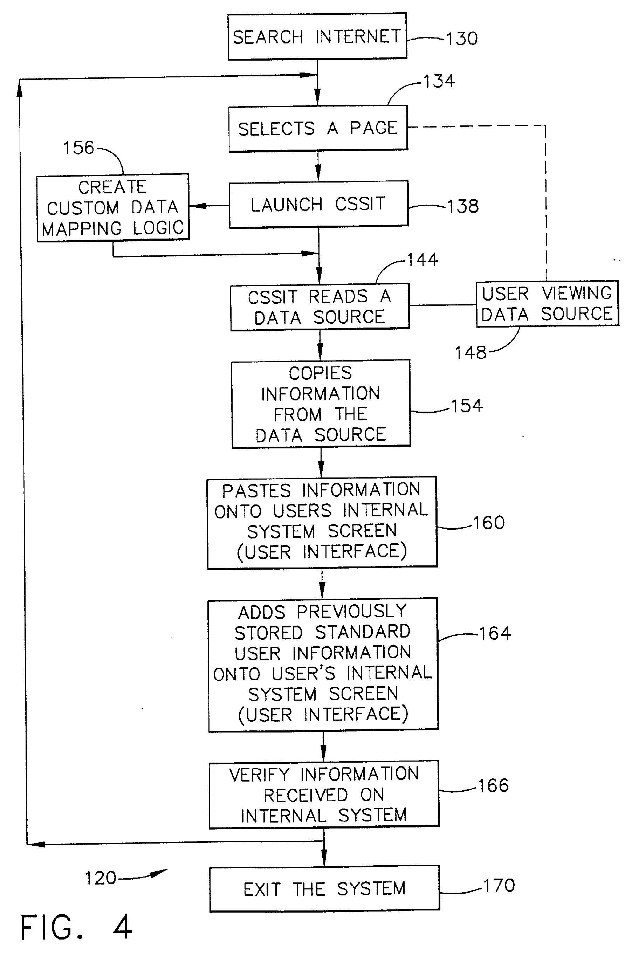

Figure 4 is a process flow chart 120 utilized by CSSIT 22 (shown in Figure 1). In an exemplary embodiment, a user searches 130 the Internet for a required product, leveraging the various search, selection, and comparison tools provided online for the selected manufacturers. Once the product is found (or selected/identified) 134, the user launches 138 CSSIT 22 which reads 144 the web page or data source that the user is viewing 148 and copies 154 all of the pertinent data or information directly from that page or data source.

Before launching 138 CSSIT 22, the user creates 156 custom data mapping logic between any number of interface screens. CSSIT 22 pastes 160 the information/data onto the user's internal purchase order screen (user interface). The information/data may be pasted 160 into any other internal systems that are integrated into CSSIT 22. In addition, CSSIT 22 adds/inputs 164 the standard user information, such as a name, a shipping address, and a department number. Subsequently, the user verifies 166 the information received in the internal system and modifies it further, if necessary. If the information is deemed accurate, the user exits 170 the system or continues mapping user interfaces. CSSIT 22 allows the user to create custom data mapping logic 156 between any number of interface screens. The user simply opens all data source screens and any destination forms desired. Then the user identifies each source data field and the appropriate destination or destinations for this data element. Once the user has identified all of the data transfer paths, the user saves this logic as a custom CSSIT transfer module. CSSIT 22 can be used to develop any number of transfer modules based on the individual user's needs, thereby avoiding data entries between external and internal systems.

For completeness, various aspects of the invention are set out in the following numbered clauses:
1. A method for mapping information using a network-based integration system (22) including a server system (12) coupled to a centralized interactive database (60) and at least one client system (14), said method comprising the steps of:
   creating custom data logic by mapping information from a network data source (48) to an client user interface (104) of an internal computer application ;
   reading (144) information from the network-based data source;
   copying (154) the information from the network-based data source; and
   transferring (160) the information that was copied from the data source onto a destination client user interface form of an internal system to eliminate the need for manual input.
2. A method according to Clause 1 wherein said step of creating (156) custom data logic further comprises the step of mapping information from an Internet-based data source (48).
3. A method according to Clause 1 wherein said step of creating (156) custom data logic further comprises the steps of:
   accessing the network-based data source;
   searching (130) the network-based data source in response to a specific inquiry;
   retrieving (134) information from the data source; and
   mapping information retrieved from the data source to a client user interface of an internal computer application.
4. A method according to Clause 1 wherein said step of reading (144) information from the data source further comprises the step of reading information from at least one of an Internet-based data source (48), an HTML file, an e-mail, an XML file, and a SGML file.
5. A method according to Clause 1 wherein said step of copying (154) the information further comprises the step of storing the information in a memory against a unique identifier.
6. A method according to Clause 1 wherein said step of transferring (160) the information further comprises the step of transferring information electronically.
7. A method according to Clause 1 wherein said step of transferring (160) the information further comprises the steps of:
   downloading the information from a server system (12); and
   inputting requested information electronically onto a destination client user interface (104) form of an internal system to eliminate the need for manual input.
8. A method according to Clause 1 wherein the step of transferring (160) information further comprises the step of exchanging information between the client system (14) and the server system (12) via a network, wherein the network is one of a wide area network (50), a local area network (36), an intranet and the Internet (48).
9. A network-based integration system (22) for mapping information, said system comprising:
   a client system (14) comprising a browser;
   a data storage device (34) for storing information;
   a software module configured to map information from a network-based data source onto a client user interface (104) of an internal computer application; and
   a server system (12) coupled to said client system, said server system further configured to:
      create custom data logic by mapping information from a network-based data source to an client user interface of an internal computer application;
      read (144) information from the data source;
      copy (154) the read information from the data source; and
      transfer (160) the information copied from the data source onto a destination client user interface form of an internal system.
10. An integration system (22) according to Clause 9 wherein said server system (12) is further configured to map information from an Internet-based data source (48).
11. An integration system (22) according to Clause 9 wherein said server system (12) is further configured to:
   access the Internet (48);
   search (130) the Internet in response to a specific inquiry;
   retrieve (134) information from the network-based data source; and
   map information retrieved from the data source to a client user interface (104).
12. An integration system (22) according to Clause 9 wherein said server system (12) is further configured to read (144) information from at least one of an Internet-based data source (48), an HTML file, an e-mail, an XML file, and a SGML file.
13. An integration system (22) according to Clause 9 wherein said server system (12) is further configured to:
   track the information on a real-time basis;
   store the information on a real time basis; and
   update stored information by adding the new information to the centralized database (60) on a real-time basis such that up-to-date information is available to a user upon request.
14. An integration system (22) according to Clause 9 wherein said server system (12) is further configured to:
   download information from the server system; and
   input requested information electronically onto a destination client user interface (104) form of an internal system to eliminate the need for manual input.
15. An integration system (22) according to Clause 9 further configured to be protected from access by unauthorized individuals.
16. An integration system (22) according to Clause 9 wherein said server system (12) is further configured with:
   a collection component (64) for collecting information from users;
   a tracking component (66) for tracking information on an on-going basis;
   a retrieving component (80) for retrieving requested information from the data storage device (34);
   an information fulfillment component (78) for downloading the requested information; and
   a displaying component (84) for displaying the downloaded information.
17. A computer program embodied on a computer readable medium for mapping information, said program comprising:
   a code segment that creates (156) custom data logic by mapping information from a network-based data source to a client user interface (104) of an internal computer application;
   a code segment that launches (138) a tool capable of reading the network-based data source that a user is viewing on the user's interface;
   a code segment that reads (144) information from the data source;
   a code segment that copies (154) the information that was read from the data source; and
   a code segment that transfers (160) the information that was copied from the data source onto a destination client user interface form of an internal system.
18. A computer program in accordance with Clause 17 further including a code segment that maps information from at least one of an Internet-based data source (48), an HTML file, an e-mail, an XML file, and a SGML file.
19. A computer program as recited in Clause 17 wherein the network is one of a wide area network (50), a local area network (36), an Internet (48), and an Intranet, and is operable using a protocol including at least one of TCP/IP and IPX.
20. A computer program as recited in Clause 17 further including a code segment that:
   accesses the Internet;
   searches (130) the Internet regarding a specific inquiry;
   retrieves (134) information from an Internet-based data source (48); and
   maps information retrieved from the Internet data source to the client user interface (104) of an internal computer application.

## Claims

1. A method for mapping information using a network-based integration system (22) including a server system (12) coupled to a centralized interactive database (60) and at least one client system (14), said method comprising the steps of:
creating custom data logic by mapping information from a network data source (48) to an client user interface (104) of an internal computer application ;
reading (144) information from the network-based data source;
copying (154) the information from the network-based data source; and
transferring (160) the information that was copied from the data source onto a destination client user interface form of an internal system to eliminate the need for manual input.

2. A method according to Claim 1 wherein said step of creating (156) custom data logic further comprises the step of mapping information from an Internet-based data source (48).

3. A method according to Claim 1 wherein said step of creating (156) custom data logic further comprises the steps of:
accessing the network-based data source;
searching (130) the network-based data source in response to a specific inquiry;
retrieving (134) information from the data source; and
mapping information retrieved from the data source to a client user interface of an internal computer application.

4. A method according to Claim 1 wherein said step of transferring (160) the information further comprises the steps of:
downloading the information from a server system (12); and
inputting requested information electronically onto a destination client user interface (104) form of an internal system to eliminate the need for manual input.

5. A network-based integration system (22) for mapping information, said system comprising:
a client system (14) comprising a browser;
a data storage device (34) for storing information;
a software module configured to map information from a network-based data source onto a client user interface (104) of an internal computer application; and
a server system (12) coupled to said client system, said server system further configured to:
create custom data logic by mapping information from a network-based data source to an client user interface of an internal computer application;
read (144) information from the data source;
copy (154) the read information from the data source; and
transfer (160) the information copied from the data source onto a destination client user interface form of an internal system.

6. An integration system (22) according to Claim 5 wherein said server system (12) is further configured to:
access the Internet (48);
search (130) the Internet in response to a specific inquiry; retrieve (134) information from the network-based data source; and map information retrieved from the data source to a client user interface (104).

7. An integration system (22) according to Claim 5 wherein said server system (12) is further configured to:
track the information on a real-time basis;
store the information on a real time basis; and
update stored information by adding the new information to the centralized database (60) on a real-time basis such that up-to-date information is available to a user upon request.

8. An integration system (22) according to Claim 5 wherein said server system (12) is further configured to:
download information from the server system; and
input requested information electronically onto a destination client user interface (104) form of an internal system to eliminate the need for manual input.

9. An integration system (22) according to Claim 5 wherein said server system (12) is further configured with:
a collection component (64) for collecting information from users;
a tracking component (66) for tracking information on an on-going basis;
a retrieving component (80) for retrieving requested information from the data storage device (34);
an information fulfillment component (78) for downloading the requested information; and
a displaying component (84) for displaying the downloaded information.

10. A computer program embodied on a computer readable medium or mapping information, said program comprising:
a code segment that creates (156) custom data logic by mapping information from a network-based data source to a client user interface (104) of an internal computer application;
a code segment that launches (138) a tool capable of reading the network-based data source that a user is viewing on the user's interface;
a code segment that reads (144) information from the data source;
a code segment that copies (154) the information that was read from the data source; and
a code segment that transfers (160) the information that was copied from the data source onto a destination client user interface form of an internal system.
